# FASCICULE DE BREVET EUROPEEN

(11) **EP 2 836 913 B1**
(45) Date de publication et mention de la délivrance du brevet: **25.12.2019**
(21) Numéro de dépôt: 13720278.4
(22) Date de dépôt: 11.04.2013
(51) Int. Cl.: G06F 11/28

(54) **DISPOSITIF POUR GÉNÉRER UNE SIGNATURE À L'EXÉCUTION D'UNE TÂCHE DE PROGRAMME ET MÉTHODE DE COMPARAISON DE FLOTS D'EXÉCUTION**
VORRICHTUNG ZUR ERZEUGUNG EINER SIGNATUR WÄHREND DER AUSFÜHRUNG EINER PROGRAMMAUFGABE UND VERFAHREN ZUM VERGLEICHEN VON AUSFÜHRUNGSFLÜSSEN
DEVICE FOR GENERATING A SIGNATURE DURING EXECUTION OF A PROGRAM TASK, AND METHOD FOR COMPARING FLOWS OF EXECUTION

(30) Priorité: 13.04.2012 FR 1253427
(43) Date de publication de la demande: 18.02.2015
(73) Titulaire: Commissariat à l'Énergie Atomique et aux Énergies Alternatives, 75015 Paris (FR); Scaleo Chip, 06560 Valbonne Sophia Antipolis (FR)
(72) Inventeur: LEMERRE, Matthieu, F-91120 Palaiseau (FR); DAVID, Vincent, F-91460 Marcoussis (FR); DEBICKI, Olivier, F-38660 Saint-Vincent-de-Mercuze (FR)
(74) Mandataire: Dudouit, Isabelle
(86) Numéro de dépôt international: PCT/EP2013/057605
(87) Numéro de publication internationale: WO 2013/153167

(56) Documents cités:
- FR-A1- 2 700 032
- FR-A1- 2 864 655
- US-A1- 2002 073 357
- US-A1- 2009 182 991

## Description

La présente invention concerne un dispositif pour générer une signature à l'exécution d'une tâche de programme et une méthode de comparaison de flots d'exécution. Elle s'applique notamment à la détection d'erreurs dans l'exécution de programmes d'ordinateurs.

Les exécutions de programmes par des systèmes électroniques sur puce peuvent être perturbés par des erreurs matérielles d'usures ou ponctuelles, par exemple des inversions de bits, aussi appelés « bit-flip ». Afin de détecter et de localiser ces défaillances, l'exécution d'une tâche peut être dupliquée une ou plusieurs fois sur une ou plusieurs unités d'exécution et leurs résultats comparés pour détecter une incohérence. Des mécanismes de vote majoritaire peuvent également permettre de résister aux erreurs.

Par la suite, on appellera « flot d'exécution » une suite de valeurs, comprenant adresses et données, transmise sur un bus reliant une unité de calcul à un module mémoire lors de l'exécution d'une tâche logicielle sur une puce comprenant ladite unité de calcul. On entend par « unité d'exécution » ou « unité de calcul » ou « cœur » un dispositif de calcul permettant d'exécuter des instructions de programmes, par exemple un microprocesseur.

Une première technique connue pour dupliquer un flot d'exécution de manière synchrone est celle du « lockstep » en permettant la redondance d'exécution. Cette technique requiert l'utilisation d'une pluralité de processeurs synchronisés à quelques cycles d'intervalle, exécutant parallèlement la même séquence d'instructions et comparant les résultats intermédiaires de l'exécution de toutes ces instructions. Toutefois, cette technique est complexe et coûteuse à mettre en oeuvre notamment à cause de l'emploi de plusieurs processeurs.

Selon une autre technique, la duplication peut également se faire de manière asynchrone, en exécutant une tâche plusieurs fois et en comparant les résultats produits par toutes les tâches. Cette technique présuppose un environnement d'exécution où les tâches s'exécutent de manière déterministe et disposent des mêmes entrées. La duplication d'un flot d'exécution peut être effectuée séquentiellement sur une seule unité d'exécution ou parallèlement sur plusieurs unités d'exécution.

La technique de duplication asynchrone permet d'économiser l'emploi d'un processeur en mode « lockstep » en ne dupliquant les flots d'exécution que pour les parties de code critiques où une vérification est nécessaire. Cependant, cette technique ne permet pas de détecter les cas dans lesquels une erreur intermédiaire dans l'exécution n'a pas altéré les résultats. En outre, si le flot d'exécution produit un grand nombre de résultats, le temps de comparaison peut excessivement s'allonger.

D'autres techniques visent à calculer une signature numérique à partir des valeurs chargées dans le registre instruction de l'unité de calcul avant décodage de ces valeurs par l'unité d'exécution.

Par exemple, dans la méthode proposée dans la demande de brevet internationale publiée sous le numéro WO2009152511, des signatures pré calculées sont insérées dans le code par un logiciel de génération de code. Au cours de l'exécution du code, ces signatures pré-calculées sont comparées à des signatures calculées à partir du registre instruction. Cette méthode nécessite donc l'instrumentation du code exécutable généré. Elle permet la détection d'une défaillance dans la séquence d'instructions exécutée, mais ne permet pas d'identifier une erreur sur les données produites ou consommées.

Une autre méthode divulguée dans la demande de brevet américain publiée sous le numéro US20070174750 propose d'instrumenter le code pour générer des signatures de blocs de code. Ensuite, à la fin de l'exécution d'un bloc, un registre de signature est mis à jour avec la signature du bloc suivant. Au démarrage de l'exécution du bloc suivant, le registre de signature est comparé avec la signature du bloc. Cette méthode permet la détection de certaines défaillances comme des défauts d'intégrité, mais ne permet pas la comparaison de flots d'exécution. De plus, elle ne permet pas non plus de détecter une erreur dans les flots de données.

D'autres méthodes telles que celles divulguées dans les demandes de brevet américains US20020116662 et US20020073357 exploitent des architectures multi-cœurs en dupliquant un processus sur plusieurs cœurs de calcul. A certains points de synchronisation, les signatures sont comparées automatiquement par un mécanisme matériel. Les résultats des processus peuvent alors être validés et écrits en mémoire. Toutefois, ces méthodes nécessitent obligatoirement la duplication du processus sur au moins deux cœurs séparés, ce qui empêche la possibilité de comparer des flots sur une machine comportant une seule unité d'exécution.

La demande de brevet français publiée sous le numéro FR2864655 divulgue un procédé de contrôle d'intégrité de programme par vérification d'empreintes de traces d'exécution. Toutefois, ce procédé est mis en œuvre par le processeur exécutant le programme à vérifier ; les moyens de contrôle d'intégrité ne sont donc pas indépendants des moyens d'exécution du programme.

La demande de brevet américaine US2009182991 propose un processeur configuré en lockstep ; cette technique ne permet pas, notamment, de comparer différentes exécutions de flots effectuées sur une même unité de calcul.

Un but de l'invention est de proposer une méthode de comparaison des flots d'exécution rapide, requérant peu de mémoire, pouvant tenir compte à la fois des données et des instructions de la tâche exécutée, détectant des erreurs n'ayant entrainé aucune altération dans les résultats produits par la tâche exécutée, et pouvant être mise en œuvre sur un système ne comportant qu'une seule unité de calcul ou plusieurs unités de calcul sans avoir à ajouter de mécanisme de synchronisation spécifique entre les unités de calcul. A cet effet, l'invention a pour objet un dispositif pour générer au moins une signature au cours de l'exécution d'une tâche de programme sur un système de calcul, au moins un flot de valeurs transitant par bus entre une mémoire et une unité de calcul dudit système pendant l'exécution de ladite tâche, le dispositif étant caractérisé en ce qu'il comprend des moyens matériels distincts de ladite unité de calcul et configurés pour observer au moins plusieurs desdites valeurs au cours de ladite exécution et pour calculer et mémoriser une signature à partir des valeurs observées, lesdits moyens matériels comprenant au moins des moyens de conversion d'adresse adaptés à convertir des adresses logiques en adresses physiques, un premier générateur de signature configuré pour observer les valeurs correspondant à des instructions à exécuter sur ladite unité de calcul, et au moins un deuxième générateur de signature configuré pour observer les valeurs correspondant à des données et des adresses produites et/ou lues par ladite tâche, chacun desdits générateurs étant apte à calculer et à mémoriser une signature à partir des valeurs dudit flot de valeurs qu'il a observées et des moyens d'activation configurés pour transmettre un signal d'inhibition à au moins un générateur de signature lorsque ladite exécution de tâche est interrompue, ledit générateur étant configuré pour ne pas autoriser de modification de la signature mémorisée après avoir reçu le signal d'inhibition. Le dispositif selon l'invention permet ainsi de générer une signature de l'exécution d'une tâche. Cette signature peut ensuite servir à vérifier l'intégrité d'une exécution ou à comparer plusieurs exécutions de la même tâche, par exemple. Avantageusement, les moyens configurés pour observer au moins plusieurs desdites valeurs sont indépendants de ladite tâche de programme. Ces moyens observent les valeurs sans les modifier. Autrement dit, la présence des moyens ne modifie pas le flot d'exécution observé, contrairement aux méthodes de vérification fondées sur des instructions intégrées à la tâche de programme exécutée.

La séparation des observations en fonction du type de valeur observé permet de générer une signature différente en fonction du type de valeurs observées et ensuite de localiser plus précisément une éventuelle erreur.

Selon un mode de réalisation du dispositif selon l'invention, lesdits moyens comprennent au moins un premier générateur de signature configuré pour observer les valeurs transitant lors des accès en lecture à la mémoire et pour ignorer les valeurs transitant lors des accès en écriture, et au moins un deuxième générateur de signature configuré pour observer les valeurs transitant lors des accès en écriture à la mémoire et pour ignorer les valeurs transitant lors des accès en lecture.

Selon un mode de réalisation du dispositif selon l'invention, lesdits moyens comprennent au moins un premier générateur de signature configuré pour observer les valeurs correspondant à des adresses, et au moins un deuxième générateur de signature configuré pour observer les valeurs correspondant à des données.

La tâche peut être exécutée par un système d'exploitation préemptif, le dispositif comprenant lesdits moyens d'activation configurés pour transmettre un signal d'inhibition à au moins un générateur de signature lorsque ladite exécution de tâche est interrompue par ledit système d'exploitation, ledit générateur étant configuré pour ne pas autoriser de modification de la signature mémorisée après avoir reçu ledit signal d'inhibition. Ce mode de réalisation permet ainsi de ne pas modifier la signature en cas d'interruption de la tâche à observer et présente donc notamment l'avantage de pouvoir être mis en œuvre sur un système de calcul préemptif sans altérer le processus de génération des signatures.

Avantageusement, lesdits moyens d'activation sont configurés pour transmettre un signal d'activation au dit générateur de signature lorsque l'exécution de ladite tâche interrompue est reprise, ledit générateur étant configuré pour autoriser la modification de la signature mémorisée après avoir reçu ledit signal d'activation. Ainsi, ce mode de réalisation permet de reprendre le calcul de la signature comme si l'exécution de la tâche n'avait pas été interrompue.

Les moyens d'activation peuvent être configurés pour recevoir l'adresse de l'instruction en cours d'exécution, ledit module d'activation étant configuré pour émettre un signal d'inhibition en fonction du résultat d'un test déterminant si ladite adresse est ou non comprise dans une ou plusieurs plages d'adresses prédéfinies. Selon un premier mode de fonctionnement possible, le signal d'inhibition est émis lorsque l'adresse est dans l'une des plages d'adresses prédéfinies. Selon un autre mode de fonctionnement, le signal d'inhibition est émis lorsque l'adresse n'est dans aucune des plages d'adresses prédéfinies.

L'invention a également pour objet un système de calcul comprenant le dispositif tel que décrit plus haut pour comparer l'exécution par un système d'exploitation préemptif d'au moins deux tâches de programme dupliquées sur la même unité de calcul ou sur des unités de calculs différentes, les routines d'interruption de tâche du système d'exploitation étant configurées pour sauvegarder dans le contexte de la tâche préemptée la valeur de signature mémorisée par le dispositif. Dans ce cas, les routines de restauration de tâches sont également configurées pour pouvoir relire la valeur de signature sauvegardée dans le contexte. Par exemple, si le dispositif mémorise la valeur de signature dans un registre, alors les routines d'interruption sont configurées pour pouvoir lire ce registre et sauvegarder la valeur de ce registre dans le contexte de la tâche. Cela permet de reprendre l'exécution de la tâche en conservant la valeur de la signature qui avait été calculée.

Lorsque des plages d'adresses sont prédéfinies pour l'inhibition d'un générateur de signature, ces plages d'adresses peuvent être avantageusement choisies en fonction de la ou des zones de mémoire dans lesquelles sont enregistrées les routines d'interruptions du système d'exploitation pour que le test d'inclusion d'adresse effectué par le module d'activation entraîne l'émission d'un signal d'inhibition lorsqu'une routine d'interruption est exécutée. Par exemple, si un signal d'inhibition est émis lorsque l'adresse de l'instruction exécutée est incluse dans une plage d'adresses, alors les plages d'adresses sont choisies de manière à inclure la ou les zones de mémoire enregistrant les routines d'interruption.

En outre, les routines d'interruption de tâche du système d'exploitation peuvent être configurées pour sauvegarder dans le contexte de la tâche préemptée lesdites plages d'adresses prédéfinies. Ce mode de réalisation permet ainsi de générer des signatures pour des tâches exécutées concurremment, chaque tâche étant par exemple associée à son propre jeu de plages d'adresses.

L'invention a également pour objet une méthode de comparaison de flots d'exécution d'instructions sur un système de calcul, la méthode comprenant une première exécution d'une séquence d'instructions sur un jeu de données et au moins une deuxième exécution de ladite séquence d'instructions sur le même jeu de données, chacune desdites exécutions produisant des transmissions d'un flot de valeurs sur un ou plusieurs bus reliant une mémoire à une unité de calcul du système de calcul, caractérisée en ce que des moyens matériels compris dans le système traduisent une adresse logique en une adresse physique et des moyens matériels calculent une première signature qui est fonction de la suite de valeurs transmises lors de la première exécution, correspondant à des instructions à exécuter sur ladite unité de calcul, et une deuxième signature qui est fonction de la suite de valeurs transmises lors de la deuxième exécution et correspondant à des données et des adresses produites et/ou lues par ladite tâche, ladite méthode comprenant à des points prédéfinis et identiques de chacune desdites exécutions une étape de comparaison entre lesdites signatures, lesdites exécutions étant asynchrones. La méthode de comparaison permet ainsi de détecter une anomalie dans l'exécution de la tâche à différents stades de son exécution.

Avantageusement, le calcul de signature est cumulatif, les moyens matériels de calcul de signature déterminant la valeur d'une signature en fonction d'une valeur précédente de ladite signature et de la valeur courante observée transitant sur le bus.

Selon une mise en œuvre de la méthode selon l'invention, chaque signature calculée est mémorisée dans un registre, la méthode comprenant une étape d'initialisation dudit registre à une valeur identique avant chaque exécution de la séquence d'instructions.

Lorsque le système de calcul est préemptif, lors de l'exécution d'une tâche sur un processeur de calcul, on peut interdire de modifier la valeur de la signature dès que le processeur passe en mode privilégié. Par exemple, un signal d'inhibition est émis par le processeur vers un générateur de signature.

Selon une mise en œuvre de la méthode selon l'invention, si les signatures comparées ne sont pas identiques, alors on exécute la séquence d'instructions de nouveau sur le même jeu de données, on calcule une nouvelle signature sur ladite nouvelle exécution et on compare ladite nouvelle signature avec les signatures précédentes.

Le dispositif selon l'invention permet de vérifier que la ou les unités de calcul exécutent les mêmes instructions sur les mêmes données pour produire les mêmes résultats. Il permet de comparer des flots d'exécution de manière asynchrone, en calculant en continu une signature des flots d'exécution. Parmi les avantages de ce dispositif, on peut noter qu'il n'est pas nécessaire de stocker les résultats issus de chaque exécution, qu'il réduit le temps classiquement requis pour comparer des résultats en comparant seulement des signatures. En outre, les flots d'exécution pour lesquels se sont produites des erreurs intermédiaires n'entraînant pas de différence de résultat produisent néanmoins une signature différente, permettant ainsi la détection de ces erreurs. Un autre avantage du dispositif selon l'invention est que la comparaison étant plus rapide qu'avec les systèmes asynchrones classiques, la comparaison peut être faite plus souvent, permettant de détecter les erreurs plus rapidement et de les localiser.

D'autres caractéristiques apparaîtront à la lecture de la description détaillée donnée à titre d'exemple et non limitative qui suit faite en regard de dessins annexés qui représentent :
- la figure 1, un mode de réalisation d'un dispositif de comparaison de flots selon l'invention ;
- la figure 2, un mode de réalisation d'un générateur de signature compris dans un dispositif selon l'invention ;
- la figure 3, un synoptique illustrant une méthode de comparaison de flots d'exécution selon l'invention,
- la figure 4, un schéma illustrant des moyens de conversion d'adresse utilisé par le dispositif selon l'invention.

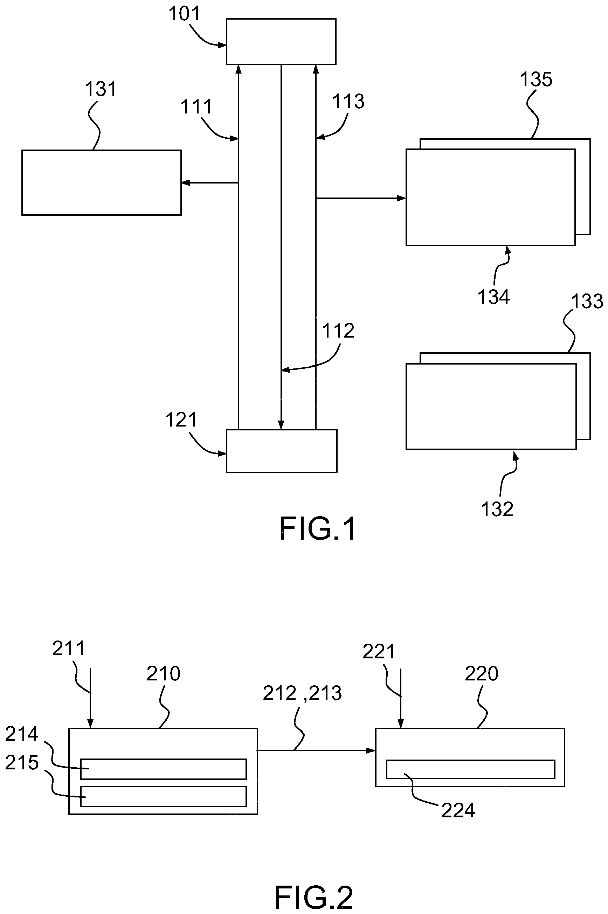

La figure 1 présente un mode de réalisation d'un dispositif de comparaison de flots selon l'invention. Le dispositif permet de générer une ou plusieurs signatures à partir de l'exécution d'une tâche de programme. Cette exécution peut être dupliquée sur une autre unité de calcul ou séquentiellement sur la même unité de calcul, de sorte que les signatures générées lors de ces exécutions puissent être comparées afin de détecter une éventuelle anomalie d'exécution. Les données fournies en entrée de la tâche ainsi que les environnements d'exécutions doivent généralement être les mêmes pour chaque duplication pour que l'exécution soit déterministe.

Le dispositif 100 comprend une ou plusieurs unités de calcul 101 reliées par bus à un ou plusieurs modules de mémoire 121 afin d'exécuter les instructions d'une tâche de programme. Il comprend également des moyens pour générer des signatures numériques en fonction des informations transitant entre la mémoire 121 et les unités de calcul. Dans l'exemple de la figure 1, le dispositif 100 comprend une seule unité de calcul, laquelle est un microprocesseur 101, un seul module mémoire 121 et un seul bus système transportant trois types de flots d'exécution 111, 112, 113.

Un premier flot 111, appelé « flot instructions » 111 comprend les instructions transportées entre le module mémoire 121 et le microprocesseur 101. Un deuxième flot de « données produites » 112 comprend les données transmises du microprocesseur 101 vers le module mémoire 121 et un troisième flot 113 de «données consommées» comprend les données transmises du module mémoire 121 vers le microprocesseur 101. Les deuxième et troisième flots 112, 113 correspondent respectivement aux données produites par le programme en cours d'exécution et les données consommées par ce même programme. Physiquement, ces flots peuvent être multiplexés sur un ou plusieurs bus.

Le dispositif selon l'invention comprend en outre des moyens 131, 132, 133, 134, 135 configurés pour observer un flot d'exécution et générer une signature à partir des observations de ce flot, étant entendu qu'une signature peut être considérée comme un nombre dont la valeur dépend des valeurs observées dans ce flot d'exécution. La signature caractérise donc la suite de valeurs observées dans le flot d'exécution.

Dans l'exemple, un premier générateur 131 de signature est associé au flot d'instructions 111, un deuxième générateur 132 et un troisième générateur 133 sont associés au flot de données produites 112, un quatrième générateur 134 et un cinquième générateur 135 sont associés au flot de données consommées 113. Les deuxième et quatrième générateurs 132, 134 permettent de générer chacun une signature à partir des adresses transportées dans les flots de données 112, 113 et les troisième et cinquième générateurs 133, 135 permettent de générer chacun une signature à partir des valeurs des données transportées dans les flots de données 112, 113. L'emploi de deux générateurs de signature pour chaque flot de données permet de générer, d'une part, des signatures propres aux adresses, et d'autre part des signatures propres aux données elles-mêmes. Cette distinction permet de localiser d'éventuelles défaillances avec une plus grande précision - autrement dit elle permet de déterminer si une défaillance provient d'une erreur dans l'adressage ou d'une erreur dans les données.

Selon un autre mode de réalisation du dispositif selon l'invention, un nombre inférieur de générateurs de signature est utilisé. Par exemple, un générateur de signature commun à l'adressage et aux données est utilisé pour chacun des flots de données 112, 113, voire un seul générateur de signature peut être employé conjointement pour les trois flots 111, 112, 113. Selon encore un autre mode de réalisation, un nombre plus élevé de générateurs de signature est employé, afin d'affiner la détection de défaillances. Selon encore un autre mode de réalisation, un ou plusieurs flots ne sont pas surveillés : par exemple, le flot des instructions n'est pas surveillé.

Un générateur est une partie d'un système sur puce (parfois désigné par le sigle anglo-saxon SoC pour « System on Chip »), par exemple un circuit de type ASIC (Application Specific Integrated Circuit) ou FPGA (Field-Programmable Gâte Array) connecté sur un bus, et dont la circuiterie est configurée pour recevoir les valeurs transportées par le bus et générer une signature à partir de ces valeurs.

Avantageusement, les générateurs sont configurés pour que les signatures générées lors de différentes exécutions du même programme soient identiques, uniquement lorsque les données et les instructions sont observées par les générateurs dans le même ordre. Aussi, préférentiellement, les valeurs du flot instructions 111 sont observées de manière à éviter de subir des accès non déterministes en mémoire, notamment à cause des mécanismes de cache. Par exemple, les valeurs transitant sur ce flot 111 sont capturées en entrée du registre instruction.

De même, les flots de données 112, 113 sont observés entre le microprocesseur 101 et le module mémoire 121, de manière à éviter que les mécanismes de caches et de mémoire tampon pouvant être présents dans le module mémoire 121 ne modifie la séquence des accès initiés par le microprocesseur 101. Ainsi, l'ordre des données observées qui sont produites et consommées par le programme est invariable d'une exécution du programme à l'autre. Ce mode de réalisation permet de détecter les erreurs d'inversion.

Selon un deuxième mode de réalisation, les générateurs de signature sont configurés pour être insensible à l'ordre dans lequel sont reçues les valeurs du flot de données. Dans ce cas, le calcul des signatures est commutatif. Ce deuxième mode de réalisation peut être employé lorsqu'aucun moyen ne permet de préserver un ordre identique des valeurs transmises dans le flot de données.

Selon d'autres modes de réalisation possibles, le dispositif comprend plusieurs unités de calcul, modules mémoires et bus. Le dispositif peut se conformer aux architectures d'ordinateur de type Von Neumann, dans lesquelles les instructions d'un programme sont enregistrées et transportées sur des supports communs à ceux correspondant aux données de ce programme, ou aux architectures de type Harvard, dans lesquelles les instructions et les données sont séparées.

La figure 2 présente un mode de réalisation d'un générateur de signature compris dans un dispositif selon l'invention. Plusieurs mises en œuvre sont possibles selon les fonctionnalités offertes par l'unité de calcul utilisée pour exécuter la tâche de programme.
Ainsi, le dispositif peut par exemple mettre en œuvre des moyens spécifiques pour désactiver le générateur 220 de signature lorsque l'unité de calcul entre dans un mode particulier (les processeurs offrent généralement un mode utilisateur et un mode privilégié).

Selon un premier mode de réalisation du dispositif selon l'invention, la désactivation du générateur est assurée directement par les processeurs, lesquels sont configurés pour transmettre directement un signal d'inhibition au générateur 220 de signature lorsqu'ils passent en mode privilégié (parfois aussi appelé mode superviseur ou « kernel mode » selon la terminologie anglo-saxonne). Lorsque la tâche est préemptée ou lorsqu'une interruption est activée, le processeur passe automatiquement en mode privilégié et émet un signal d'inhibition, de manière à figer la signature produite par le générateur 220. Cette préemption ne doit pas être confondue avec la gestion d'exception par une tâche de programme elle-même (par des gestionnaires souvent appelés « exception handlers »).

Le générateur 220 de signature de la figure 2, qui peut par exemple être l'un des générateurs 131, 132, 133, 134, 135 de la figure 1, peut être commandé par un module d'activation 210. Ce module d'activation 210 permet de désactiver et d'activer le générateur 220 en fonction, par exemple, d'une adresse 211 qui lui est fournie en entrée. Le générateur 220 permet de déterminer une signature en fonction au moins d'une valeur 221 qui lui est fournie en entrée, cette valeur pouvant être une donnée ou une adresse, par exemple.

Le générateur 220 comprend des moyens de mémorisation 224 d'une signature, par exemple un registre 224. Avantageusement, le calcul de la signature est cumulatif ; autrement dit, celui-ci est effectué en fonction de la valeur précédente de la signature, de sorte qu'une signature est calculée à la fois en fonction de la valeur 221 d'entrée et en fonction de la valeur de signature courante. Un calcul de type contrôle de redondance cyclique, plus communément désigné par le sigle CRC, peut être effectué pour générer une signature. Ainsi, la valeur de la signature mémorisée par le registre 224 est mise à jour à chaque nouvelle valeur 221 issue du flot observé.

Dans l'exemple, le module d'activation 210 comprend des premiers moyens de mémorisation 214 et des deuxièmes moyens de mémorisation 215, par exemple des registres 214, 215, afin d'enregistrer une plage d'adresses. La borne haute de la plage est enregistrée par le premier registre 214 et la borne basse de la plage est enregistrée par le deuxième registre 215. L'adresse 211 qu'il reçoit en entrée est l'adresse de la donnée ou de l'instruction qui est transportée dans le flot d'exécution.

Selon un premier mode de fonctionnement possible du module d'activation 210, la plage d'adresses est considérée comme une plage d'adresses interdites. Lorsque l'adresse 211 fournie en entrée du module d'activation 210 est comprise dans la plage d'adresses enregistrée par les registres 214, 215, alors le module d'activation 210 transmet un signal d'inhibition 212 au générateur 220. Sur réception de ce signal d'inhibition 212, le générateur 220 passe dans un mode dans lequel il ne modifie pas la signature enregistrée par son registre 224. La valeur de signature est donc figée tant qu'un signal d'activation n'est pas transmis au générateur 220. Lorsque l'adresse 211 fournie en entrée du module d'activation 210 est exclue de la plage d'adresses enregistrée par les registres 214, 215, alors le module d'activation 210 transmet un signal d'activation 213 au générateur 220 et la signature peut de nouveau être modifiée.

Avantageusement, le registre 224 d'enregistrement de la signature est accessible en lecture et en écriture par l'unité de calcul. L'accès en lecture permet de sauvegarder la valeur de la signature en cas, par exemple, de préemption de la tâche par le système d'exploitation. L'accès en écriture au registre permet de réécrire la valeur sauvegardée de la signature, notamment en cas de reprise de l'exécution d'une tâche interrompue. Selon un mode de réalisation, le registre 224 peut également être réinitialisé par un signal issu d'une unité d'exécution.

Afin de permettre au dispositif selon l'invention de fonctionner dans un environnement préemptif, le registre 224 de mémorisation de la signature fait partie du contexte d'exécution d'une tâche. Pour cela, la routine d'interruption exécutée lors de la préemption d'une tâche est modifiée pour inclure une sauvegarde de ce registre 224. La routine de restauration d'une tâche est également exécutée. Le registre 224 est donc accessible par le programme et peut être sauvegardé et restauré par le système d'exploitation, notamment en cas de préemption de la tâche de ce programme. Les exécutions de ces routines d'interruption et de restauration ne doivent pas elles-mêmes modifier la valeur de la signature enregistrée, avant d'avoir sauvegardé cette signature dans le cas d'une interruption, ou après l'avoir restaurée dans le cas d'une restauration de tâche. Pour cela, les plages d'adresses du module d'activation sont configurées pour inhiber le générateur de signature lorsque ces routines sont exécutées (par exemple, les routines sont placées dans une zone mémoire incluse dans la zone d'inhibition du générateur). Plus généralement, le code et les données du système d'exploitation sont agencés de manière à ce que l'exécution du système d'exploitation ne modifie pas la valeur du registre de signature, au moins entre les moments où la tâche est exécutée et celui où le registre de signature est lu/restauré.

Optionnellement, les routines d'interruption et de restauration de tâche du système d'exploitation sont configurées pour que les registres 214, 215 de mémorisation des plages d'adresses soient également sauvegardés dans le contexte de la tâche préemptée.

Placer le code et les données d'une application de manière contiguë dans la mémoire n'est pas aisé, notamment à cause de la présence de bibliothèques de fonctions partagées. Aussi, le fait de considérer une plage d'adresses d'inhibition plutôt qu'une plage d'adresses d'activation permet d'éviter de devoir placer le code et les données d'une application dans cette plage. En outre, afin que l'exécution du système d'exploitation ne modifie pas la valeur de la signature enregistrée par le registre 224, le code et les données du système d'exploitation sont avantageusement placés dans la plage d'adresse spécifiée par les registres 214, 215, placer le code et les données de gestion des interruptions du système d'exploitation de sauvegarde de contexte de manière contiguë étant relativement aisé. De plus, les registres 214, 215 sont paramétrés à l'initialisation, sans qu'il soit besoin de les remodifier par la suite.

Selon un autre mode de réalisation du module d'activation 210, la plage d'adresses enregistrée par le module d'activation est considérée comme une plage d'adresses autorisées, définissant ainsi une fenêtre d'observation de la mémoire. En d'autres termes, un signal d'activation 213 est transmis au module de calcul 220 lorsque l'adresse 211 fournie en entrée du module d'activation 210 est comprise dans la plage d'adresses et un signal d'inhibition 212 lui est transmis lorsque ladite adresse 211 est exclue de cette même plage. Ainsi le générateur de signature peut être activé que pour certaines tâches nécessitant une duplication de sûreté.

Selon un mode de réalisation du module d'activation, celui-ci comprend, au lieu d'une seule paire de registres 214, 215, une pluralité de paires de registres afin de définir une pluralité de plages d'adresses d'activation ou de désactivation. Par exemple, plusieurs plages d'adresses interdites sont définies de sorte que si l'adresse 211 fournie en entrée est comprise dans l'une de ces plages, alors un signal d'inhibition 212 est émis.

Avantageusement, seuls deux modules d'activation 210 sont employés pour commander les générateurs de signature d'un dispositif selon l'invention, un premier étant dédié à la commande d'un générateur de signature lié au flot d'instructions 111 (cf. figure 1), et un second étant dédié conjointement aux commandes des générateurs de signature liés aux flots de données en lecture et en écriture 112, 113.

Selon un autre mode de réalisation, un seul module d'activation 210 commun aux flots de données 112, 113 et au flot d'instructions 111 est utilisé. Dans ce cas, le module d'activation 210 effectue des comparaisons sur les adresses des instructions et préférentiellement, des moyens sont mis en œuvre pour tenir compte du décalage entre le trafic sur les flots de données et celui sur le flot d'instructions, ce décalage étant dû en particulier au temps de traitement par le processeur (pipeline par exemple).

Selon un encore autre mode de réalisation, un module d'activation 210 différent est utilisé pour commander chaque module de calcul de signature.

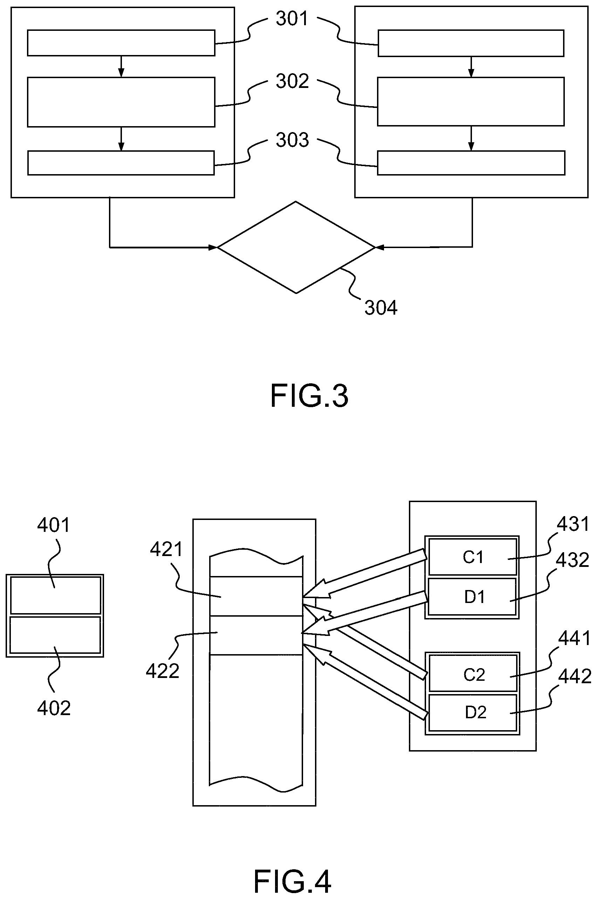

La figure 3 illustre par un synoptique une méthode de comparaison de flots d'exécution selon l'invention. Afin de détecter une erreur lors de l'exécution d'une tâche de programme, cette tâche est exécutée au moins deux fois, en parallèle sur des unités de calcul distinctes, ou de manière séquentielle. La duplication de l'exécution de manière séquentielle peut être effectuée soit sur la même unité de calcul, soit sur une unité de calcul distincte.

Dans un premier temps 301, pour chaque instance de la tâche dupliquée, les plages d'adresses du ou des modules d'activation 210 (cf. figure 2) sont initialisées, de manière à éviter la modification de la signature lors des accès mémoire effectués par le système d'exploitation. Dans l'exemple de la figure 2, les registres 214, 215 sont paramétrés.

Dans un deuxième temps 302, les registres de mémorisation des signatures sont initialisés à une même valeur. La valeur d'initialisation de la signature est la même pour chaque instance d'exécution de manière à ce que le mode de calcul de type cumulatif n'engendre pas des signatures différentes pour plusieurs séquences d'instructions identiques.

Dans un troisième temps 303, la tâche est exécutée pour chaque instance dupliquée. La signature est alors modifiée au cours de la transmission des flots d'adresses et de données entre le ou les modules mémoires et le ou les unités de calcul.

Dans un quatrième temps 304, à l'issue de l'exécution de chaque instance de la tâche dupliquée, les valeurs des différentes signatures obtenues sont lues et comparées entre elles. Les signatures sont par exemple comparées par une routine du système d'exploitation à la fin de l'exécution des tâches de programme.

Selon une autre mise en œuvre de la méthode selon l'invention, la comparaison des signatures est effectuée à des étapes intermédiaires de l'exécution pour permettre une détection d'erreur au plus tôt. Par exemple, des points de vérification intermédiaires sont définis pour mémoriser plusieurs signatures intermédiaires, ces signatures intermédiaires étant alors comparées deux à deux après l'exécution des tâches dupliquées ou au fur et à mesure de leur exécution. Il est ainsi possible de localiser plus précisément une erreur d'exécution.

Si au moins parmi toutes les signatures obtenues, au moins une valeur de signature est différente de celles des autres, alors cela indique une erreur dans l'exécution d'une instance de la tâche. Dans le cas où seulement deux instances sont exécutées et que les deux signatures obtenues ne seraient pas identiques, alors une troisième instance d'exécution de la même tâche peut être créée. Un algorithme d'analyse de défaillance, connu de l'homme de l'art peut ensuite être employé pour localiser la faute ayant entraîné cette défaillance.

En cas de défaillance d'une unité de calcul ayant exécuté l'une des instances de la tâche, le système peut déterminer l'origine de la faute et tenter une stratégie alternative.

En cas de faute, le dispositif selon l'invention permet de déterminer l'origine de la faute. Ainsi, la faute peut être due à un défaut dans l'intégrité du code exécuté. Ce type de défaut peut être provoqué par exemple par une défaillance du mécanisme matériel d'élaboration de l'adresse instruction : ainsi un saut peut être le résultat de spéculations complexes lors de branchements dans le flot d'exécution. La faute peut également être due à une défaillance définitive ou temporaire dans l'unité d'exécution. Dans ce cas, l'accès aux données ou la production de données par l'unité d'exécution est altérée. La faute peut également être due aux instructions ou aux données qui ne sont pas les mêmes en entrée de l'unité d'exécution, à cause par exemple d'une défaillance logicielle ou matérielle dans le mécanisme de duplication.

Comme il a été déjà observé en regard de la figure 3, le dispositif est optionnellement configuré pour prendre en compte la préemption de tâches, c'est-à-dire l'exécution en temps partagé de plusieurs travaux simultanément sur un même cœur, pour permettre de faire le calcul de signatures sur plusieurs travaux s'exécutant en parallèle sur un même cœur. Un flot d'exécution peut donc optionnellement être interrompu ou préempté. Les valeurs des registres du générateur de signature ainsi que des modules d'activation sont sauvegardés avec le contexte d'exécution de la tâche, de sorte qu'avant de reprendre l'exécution de la tâche, les registres de signatures sont rechargés avec les valeurs qui ont été préalablement sauvegardées dans le contexte. Les plages d'adresses 214, 215 du module d'activation 210 sont configurées pour que toutes ces opérations de sauvegarde et de rechargement de contexte ne modifient pas la valeur de la signature.

La figure 4 illustre par un schéma des moyens de conversion d'adresse utilisé par le dispositif selon l'invention. Pour qu'un générateur puisse accéder aux données via les mêmes adresses et dans le même ordre quelles que soient les instances d'exécution des tâches, le dispositif selon l'invention met en œuvre des moyens de conversion d'adresse. Ces moyens de conversion d'adresse peuvent être intégrés à l'unité de calcul du dispositif et peuvent prendre la forme, par exemple de tables de translation (TLB) permettant de convertir des adresses dites logiques (ou virtuelles) en adresses dites physiques.

Dans l'exemple de la figure 4, deux unités de calcul manipulent des adresses logiques. Un décodeur d'adresse 420 active le bloc de mémoire physique correspondant à l'adresse logique spécifiée. Plusieurs blocs physiques peuvent partager une même zone logique, l'arbitrage entre ces blocs physiques étant effectué par le décodeur d'adresse 420 en fonction d'un état contrôlé, par exemple, par l'application exécutant la tâche.

La première unité de calcul 401 exécute une séquence d'instructions à partir du code et des données contenues dans de premiers blocs de mémoire physique 431, 432, en manipulant des adresses logiques comprises dans des zones 421, 422. La deuxième unité de calcul 402 exécute une séquence d'instructions à partir du code et des données contenues dans de deuxièmes blocs de mémoire physique 441, 442, en manipulant des adresses logiques comprises dans les mêmes zones 421, 422. Ainsi les unités de calcul 401, 402 voient des zones de mémoire physiques 431, 432, 441, 442 différentes à travers les mêmes zones d'adressage logique 421, 422. Aussi, les registres des modules d'activation 210 (cf. figure 2) définissant les plages d'adresses d'activation ou d'inhibition sont, de préférence, initialisés avec les adresses de début et de fin des zones d'adressage logique 421, 422.

Ainsi, grâce à cet adressage logique, un générateur de signature observe, pour chaque instance de tâche, le même flot de valeurs et produit par conséquent la même signature lorsqu'aucune défaillance n'intervient. Pour les duplications de flots d'exécution sur des unités de calcul distinctes, l'adressage logique peut être mis en œuvre, par exemple, en ajoutant une porte logique « not » sur le bit de poids fort du bus d'adresse lié à l'une des unités de calcul. L'espace de mémoire physique est ainsi partitionné en deux parties correspondant chacune à une unité de calcul.

Le dispositif selon l'invention peut notamment être utilisé pour assurer la sûreté de fonctionnement d'une application, la duplication de l'exécution de certaines tâches permettant la détection de fautes et la mise en œuvre d'algorithmes de tolérance aux fautes.

Un exemple d'utilisation du dispositif selon l'invention est maintenant présenté. Un système de calcul doit exécuter cinq tâches notées T1, T2, T3, T4, T5. La tâche T1 requiert 10% de la capacité de calcul du système, la tâche T2 requiert 20%, la tâche T3 requiert 30%, la tâche T4 requiert 40%, la tâche T5 requiert 50%. Les tâches T1 et T2 sont considérées comme critiques au sens où une erreur lors de leur exécution doit impérativement être détectée. Il est impossible d'exécuter toutes les tâches sur deux cœurs de calcul configurés en lockstep, puisque la somme de ressources de calcul requises est de 10+20+30+40+50=150% des ressources disponibles du système.

A contrario, le dispositif selon l'invention peut exploiter avantageusement deux cœurs de calcul qui ne sont pas configurés en lockstep, un premier cœur exécutant les tâches T1, T2, T3, T4 et un deuxième cœur exécutant les tâches T1 (duplication), T2 (duplication), et T5. Le premier cœur est donc mobilisé à 100% et le deuxième cœur est mobilisé à 80%. Grâce au dispositif selon l'invention, toutes les tâches peuvent être exécutées, les tâches T1 et T2 peuvent être dupliquées pour assurer une sûreté de fonctionnement et 20% des ressources d'un cœur demeurent disponibles pour l'exécution d'autres tâches.

Un avantage du dispositif selon l'invention est sa simplicité de réalisation. Il peut être mis en œuvre sur des systèmes n'étant pas initialement conçus pour la sûreté d'exécution. Le dispositif est adaptable à la plupart des systèmes. La duplication des flots d'exécution peut être effectuée séquentiellement par un même processeur ou de manière asynchrone sur plusieurs processeurs. Les processeurs doivent cependant supporter le même jeu d'instruction.

Contrairement à la technique connue de lockstep, le dispositif selon l'invention permet, si nécessaire, de réserver la duplication aux seules tâches considérées comme critiques et ainsi de bénéficier des performances offertes par l'architecture du système de calcul - par exemple du multi cœurs - pour l'exécution des autres tâches de programme.

Le dispositif selon l'invention permet également la comparaison des signatures à des instants intermédiaires dans le flot d'exécution.

Par ailleurs, le dispositif selon l'invention ne requiert aucune duplication de l'espace de stockage des résultats de la tâche dupliquée, puisqu'il ne requiert pas la comparaison de ces résultats. Un seul espace de stockage est nécessaire et les seules signatures sont comparées, ce qui permet de réaliser un gain en mémoire.

## Revendications

1. Dispositif pour générer au moins une signature au cours de l'exécution d'une tâche de programme sur un système de calcul, au moins un flot de valeurs (111, 112, 113) transitant par bus entre une mémoire (121) et une unité de calcul (101) dudit système pendant l'exécution de ladite tâche, le dispositif étant **caractérisé en ce qu'**il comprend: des moyens matériels (131, 132, 133, 134, 135) distincts de ladite unité de calcul (101) et configurés pour initialiser et mémoriser une signature, lesdits moyens matériels comprenant au moins des moyens de conversion d'adresse adaptés à convertir des adresses logiques en adresses physiques, un premier générateur (131) de signature configuré pour observer les valeurs correspondant à des instructions à exécuter sur ladite unité de calcul, et au moins un deuxième générateur (132, 133, 134, 135) de signature configuré pour observer les valeurs correspondant à des données et des adresses produites et/ou lues par ladite tâche, chacun desdits générateurs (131, 132, 133, 134, 135) étant apte à calculer et à mémoriser une signature à partir des valeurs dudit flot de valeurs qu'il a observées au cours de ladite exécution pour mettre à jour ladite signature mémorisée à partir de la ou des valeurs observées dudit flot de valeurs et des moyens d'activation (210) configurés pour transmettre un signal d'inhibition à au moins un générateur de signature lorsque ladite exécution de tâche est interrompue, ledit générateur étant configuré pour ne pas autoriser de modification de la signature mémorisée après avoir reçu ledit signal d'inhibition.

2. Dispositif selon la revendication 1, dans lequel lesdits moyens comprennent au moins un premier générateur (134, 135) de signature configuré pour observer les valeurs transitant lors des accès en lecture (113) à la mémoire et pour ignorer les valeurs transitant lors des accès en écriture (112), et au moins un deuxième générateur (132, 133) de signature configuré pour observer les valeurs transitant lors des accès en écriture (112) à la mémoire et pour ignorer les valeurs transitant lors des accès en lecture (113).

3. Dispositif selon l'une quelconque des revendications 1 à 2, dans lequel lesdits moyens comprennent au moins un premier générateur (132, 134) de signature configuré pour observer les valeurs correspondant à des adresses, et au moins un deuxième générateur (133, 135) de signature configuré pour observer les valeurs correspondant à des données.

4. Dispositif selon l'une quelconque des revendications précédentes, ladite tâche étant exécutée par un système d'exploitation préemptif, dans lequel le dispositif comprend lesdits moyens d'activation (210).

5. Dispositif selon la revendication 4, dans lequel lesdits moyens d'activation (210) sont configurés pour transmettre un signal d'activation au dit générateur (220) de signature lorsque l'exécution de ladite tâche interrompue est reprise, ledit générateur (220) étant configuré pour autoriser la modification de la signature mémorisée après avoir reçu ledit signal d'activation.

6. Dispositif selon la revendication 4 ou 5, dans lequel les moyens d'activation (210) sont configurés pour recevoir l'adresse de l'instruction en cours d'exécution, ledit module d'activation (210) étant configuré pour émettre un signal d'inhibition en fonction du résultat d'un test déterminant si ladite adresse est ou non comprise dans une ou plusieurs plages d'adresses prédéfinies.

7. Système de calcul comprenant le dispositif selon l'une des revendications 4 à 6 pour comparer l'exécution par un système d'exploitation préemptif d'au moins deux tâches de programme dupliquées sur la même unité de calcul ou sur des unités de calculs différentes, **caractérisé en ce que** les routines d'interruption de tâche du système d'exploitation sont configurées pour sauvegarder dans le contexte de la tâche préemptée la valeur de signature mémorisée (224) par le dispositif.

8. Système de calcul comprenant le dispositif selon la revendication 6 pour comparer l'exécution par un système d'exploitation préemptif d'au moins deux tâches de programme dupliquées sur la même unité de calcul ou sur des unités de calculs différentes, dans lequel les plages d'adresses prédéfinies sont choisies en fonction de la ou des zones de mémoire dans lesquelles sont enregistrées les routines d'interruptions du système d'exploitation pour que le test d'inclusion d'adresse effectué par le module d'activation (210) entraîne l'émission d'un signal d'inhibition lorsqu'une routine d'interruption est exécutée.

9. Système de calcul selon la revendication 8, dans lequel les routines d'interruption de tâche du système d'exploitation sont configurées pour sauvegarder dans le contexte de la tâche préemptée lesdites plages d'adresses prédéfinies.

10. Méthode de comparaison de flots d'exécution d'instructions sur un système de calcul, la méthode comprenant une première exécution d'une séquence d'instructions sur un jeu de données et au moins une deuxième exécution de ladite séquence d'instructions sur le même jeu de données, chacune desdites exécutions produisant des transmissions d'un flot de valeurs sur un ou plusieurs bus reliant une mémoire à une unité de calcul du système de calcul, **caractérisée en ce que** des moyens matériels compris dans le système traduisent une adresse logique en une adresse physique et des moyens matériels calculent une première signature qui est fonction de la suite de valeurs transmises lors de la première exécution correspondant à des instructions à exécuter sur ladite unité de calcul et une deuxième signature qui est fonction de la suite de valeurs transmises lors de la deuxième exécution et correspondant à des données et des adresses produites et/ou lues par ladite tâche, ladite méthode comprenant à un ou plusieurs points prédéfinis et identiques de chacune desdites exécutions une étape de comparaison (304) entre lesdites signatures afin de détecter une anomalie dans l'exécution de la tâche à différents stades de son exécution, lesdites exécutions étant asynchrones et **en ce qu'**un signal d'inhibition est transmis aux moyens de calcul de signature lorsque ladite exécution de tâche est interrompue, afin de ne pas autoriser de modification de la signature mémorisée après avoir reçu ledit signal d'inhibition.

11. Méthode de comparaison de flots d'exécution d'instructions selon la revendication 10, dans laquelle le calcul de signature est cumulatif, les moyens matériels de calcul de signature déterminant la valeur d'une signature en fonction d'une valeur précédente de ladite signature et de la valeur courante observée transitant sur le bus.

12. Méthode de comparaison de flots d'exécution d'instructions selon la revendication 10 ou 11, dans laquelle chaque signature calculée est mémorisée dans un registre (224), la méthode comprenant une étape d'initialisation (302) dudit registre (224) à une valeur identique avant chaque exécution de la séquence d'instructions.

13. Méthode de comparaison de flots d'exécution d'instructions selon l'une des revendications 10 à 12, le système de calcul étant préemptif, dans laquelle, lors de l'exécution d'une tâche sur un processeur de calcul, on interdit de modifier la valeur de la signature dès que le processeur passe en mode privilégié.

14. Méthode de comparaison de flots d'exécution d'instructions selon l'une des revendications 10 à 13, dans laquelle si les signatures comparées ne sont pas identiques, alors on exécute la séquence d'instructions de nouveau sur le même jeu de données, on calcule une nouvelle signature sur ladite nouvelle exécution et on compare ladite nouvelle signature avec les signatures précédentes.

## Patentansprüche

1. Vorrichtung zum Erzeugen mindestens einer Signatur im Laufe der Ausführung einer Programmaufgabe auf einem Rechensystem, wobei mindestens ein Wertefluss (111, 112, 113) per Bus zwischen einem Speicher (121) und einer Recheneinheit (101) des Systems während der Ausführung der Aufgabe übertragen wird, wobei die Vorrichtung **dadurch gekennzeichnet ist, dass** sie Folgendes umfasst: Hardware-Mittel (131, 132, 133, 134, 135) separat von der Recheneinheit (101) und konfiguriert zum Initialisieren und Speichern einer Signatur, wobei die Hardware-Mittel mindestens Adressumwandlungsmittel umfassen, ausgelegt zum Umwandeln von logischen Adressen in physische Adressen, einen ersten Signaturgenerator (131), konfiguriert zum Beobachten der Werte, die auf der Recheneinheit auszuführenden Anweisungen entsprechen, und mindestens einen zweiten Signaturgenerator (132, 133, 134, 135), konfiguriert zum Beachten der Werte, die Daten und Adressen entsprechen, die von der Aufgabe produziert und/oder gelesen werden, wobei jeder der Generatoren (131, 132, 133, 134, 135) eine Signatur auf der Basis der Werte des Werteflusses berechnen und speichern kann, die er im Laufe der Ausführung beachtet hat, um die auf der Basis des einen oder der mehreren beachteten Werte des Werteflusses gespeicherte Signatur zu aktualisieren, und Aktivierungsmittel (210), konfiguriert zum Übertragen eines Sperrsignals zu mindestens einem Signaturgenerator, wenn die Aufgabenausführung unterbrochen wird, wobei der Generator so konfiguriert ist, dass er die Modifikation der gespeicherten Signatur nach dem Empfang des Sperrsignals nicht zulässt.

2. Vorrichtung nach Anspruch 1, bei der die Mittel mindestens einen ersten Signaturgenerator (134, 135) umfassen, konfiguriert zum Beachten der Werte, die während des Lesezugriffs (113) auf den Speicher übertragen werden, und zum Ignorieren der Werte, die während des Schreibzugriffs (112) übertragen werden, und mindestens einen zweiten Signaturgenerator (132, 133), konfiguriert zum Beachten der Werte, die bei Schreibzugriffen (112) auf den Speicher übertragen werden, und zum Ignorieren der Werte, die bei Lesezugriffen (113) übertragen werden.

3. Vorrichtung nach einem der Ansprüche 1 bis 2, bei der die Mittel mindestens einen ersten Signaturgenerator (132, 134) umfassen, konfiguriert zum Beachten der Werte, die Adressen entsprechen, und mindestens einen zweiten Signaturgenerator (133, 135), konfiguriert zum Beachten der Werte, die Daten entsprechen.

4. Vorrichtung nach einem der vorherigen Ansprüche, wobei die Aufgabe von einem präemptiven Betriebssystem ausgeführt wird, in dem die Vorrichtung die Aktivierungsmittel (210) umfasst.

5. Vorrichtung nach Anspruch 4, bei der die Aktivierungsmittel (210) zum Senden eines Aktivierungssignals zum Signaturgenerator (220) konfiguriert sind, wenn die Ausführung der unterbrochenen Aufgabe wiederaufgenommen wird, wobei der Generator (220) zum Autorisieren der Modifikation der gespeicherten Signatur nach dem Empfang des Aktivierungssignals konfiguriert ist.

6. Vorrichtung nach Anspruch 4 oder 5, bei der die Aktivierungsmittel (210) zum Empfangen der Adresse des Befehls im Laufe der Ausführung konfiguriert sind, wobei das Aktivierungsmodul (210) zum Aussenden eines Sperrsignals in Abhängigkeit vom Ergebnis eines Tests konfiguriert ist, der feststellt, ob die Adresse in einem oder mehreren vordefinierten Adressbereichen enthalten ist oder nicht.

7. Rechensystem, das die Vorrichtung nach einem der Ansprüche 4 bis 6 umfasst, zum Vergleichen der Ausführung, durch ein präemptives Betriebssystem, von mindestens zwei auf derselben Recheneinheit oder auf unterschiedlichen Recheneinheiten duplizierten Programmaufgaben, **dadurch gekennzeichnet, dass** die Aufgabenunterbrechungsroutinen des Betriebssystems zum Schützen, im Kontext der präemptierten Aufgabe, des von der Vorrichtung gespeicherten Signaturwertes (224) konfiguriert sind.

8. Rechensystem, das die Vorrichtung nach Anspruch 6 umfasst, zum Vergleichen der Ausführung, durch ein präemptives Betriebssystem, von mindestens zwei auf derselben Recheneinheit oder auf unterschiedlichen Recheneinheiten duplizierten Programmaufgaben, in dem die vordefinierten Adressbereiche in Abhängigkeit von den ein oder mehreren Speicherzonen gewählt werden, in denen die Unterbrechungsroutinen des Betriebssystems aufgezeichnet sind, damit der von dem Aktivierungsmodul (210) durchgeführte Adresseneinschlusstest die Aussendung eines Sperrsignals bewirkt, wenn eine Unterbrechungsroutine ausgeführt wird.

9. Rechensystem nach Anspruch 8, bei dem die Aufgabenunterbrechungsroutinen des Betriebssystems zum Schützen, im Kontext der präemptierten Aufgabe, der vordefinierten Adressbereiche konfiguriert sind.

10. Verfahren zum Vergleichen von Befehlsausführungsflüssen auf einem Rechensystem, wobei das Verfahren eine erste Ausführung einer Befehlssequenz auf einem Datensatz und mindestens eine zweite Ausführung der Befehlssequenz auf demselben Datensatz beinhaltet, wobei jede der Ausführungen Übertragungen eines Werteflusses auf einem oder mehreren Bussen produziert, die einen Speicher mit einer Recheneinheit des Rechensystems verbindet, **dadurch gekennzeichnet, dass** die in dem System enthaltenen Hardware-Systeme eine logische Adresse in eine physische Adresse umsetzen, und Hardware-Mittel eine erste Signatur, die von der Gruppe von während der ersten Ausführung übertragenen Werten abhängig ist, entsprechend auf der Recheneinheit auszuführenden Befehlen, und eine zweite Signatur berechnen, die von der Gruppe von während der zweiten Ausführung übertragenen Werten abhängig ist, entsprechend von der Aufgabe produzierten und/oder gelesenen Daten und Adressen, wobei das Verfahren an einem oder mehreren vordefinierten und identischen Punkten von jeder der Ausführungen einen Vergleichsschritt (304) zwischen den Signaturen umfasst, um eine Anomalie in der Ausführung der Aufgabe in unterschiedlichen Phasen ihrer Ausführung zu erkennen, wobei die Ausführungen asynchron sind, und dadurch, dass ein Sperrsignal zu den Signaturrechenmitteln übertragen wird, wenn die Aufgabenausführung unterbrochen wird, um die Modifikation der gespeicherten Signatur nach dem Empfang des Sperrsignals nicht zuzulassen.

11. Verfahren zum Vergleichen von Befehlsausführungsflüssen nach Anspruch 10, bei dem die Signaturberechnung kumulativ ist, wobei die Hardware-Mittel zur Signaturberechnung den Wert einer Signatur in Abhängigkeit von einem vorherigen Wert der Signatur und von einem beachteten laufenden Wert bestimmen, der auf dem Bus übertragen wird.

12. Verfahren zum Vergleichen von Befehlsausführungsflüssen nach Anspruch 10 oder 11, bei dem jede berechnete Signatur in einem Register (224) gespeichert wird, wobei das Verfahren einen Schritt (302) des Initialisierens des Registers (224) mit einem identischen Wert vor jeder Ausführung der Befehlssequenz beinhaltet.

13. Verfahren zum Vergleichen von Befehlsausführungsflüssen nach einem der Ansprüche 10 bis 12, wobei das Rechensystem präemptiv ist, bei dem während der Ausführung einer Aufgabe auf einem Rechenprozessor die Modifikation des Wertes der Signatur untersagt wird, sobald der Prozessor in den privilegierten Modus wechselt.

14. Verfahren zum Vergleichen von Befehlsausführungsflüssen nach einem der Ansprüche 10 bis 13, bei dem, wenn die verglichenen Signaturen nicht identisch sind, die Befehlssequenz erneut auf demselben Datensatz ausgeführt wird, eine neue Signatur bei der neuen Ausführung berechnet und die neue Signatur mit den vorherigen Signaturen verglichen wird.

## Claims

1. Device for generating at least one signature during the execution of a programme task on a calculation system, at least one value stream (111, 112, 113) passing via a bus between a memory (121) and a calculation unit (101) of the system during the execution of the task, the device being **characterised in that** it comprises: hardware means (131, 132, 133, 134, 135) which are separate from the calculation unit (101) and which are configured to initialise and store a signature, the hardware means comprising at least address conversion means which are capable of converting logic addresses into physical addresses, a first signature generator (131) which is configured to observe the values corresponding to instructions to be executed on the calculation unit, and at least a second signature generator (132, 133, 134, 135) which is configured to observe the values corresponding to data and addresses produced and/or read by the said task, each of the generators (131, 132, 133, 134, 135) being adapted for calculating and storing a signature from the values of the stream of values which it has observed during the execution in order to update the signature stored from the value(s) observed from the stream of values and activation means (210) which are configured to transmit an inhibition signal to at least one signature generator when the execution of the task is interrupted, the generator being configured not to authorise a modification of the stored signature after receiving said inhibition signal.

2. Device according to claim 1, wherein the said means comprise at least a first signature generator (134, 135) which is configured to observe the values passing during read access (113) to the memory and to ignore the values passing during write access (112), and at least a second signature generator (132, 133) which is configured to observe the values passing during write access (112) to the memory and to ignore the values passing during read access (113).

3. Device according to any one of claims 1 to 2, wherein said means comprise at least a first signature generator (132, 134) which is configured to observe the values corresponding to addresses, and at least a second signature generator (133, 135) which is configured to observe the values corresponding to data.

4. Device according to any one of the preceding claims, the said task being executed by a pre-emptive operating system in which the device comprises said activation means (210).

5. Device according to claim 4, wherein said activation means (210) are configured to transmit an activation signal to the signature generator (220) when the execution of the interrupted task is resumed, the generator (220) being configured to authorise the modification of the stored signature after receiving the said activation signal.

6. Device according to claim 4 or claim 5, wherein said activation means (210) are configured to receive the address of the instruction which is being executed, said activation module (210) being configured to transmit an inhibition signal in accordance with the result of a test which determines whether or not the address is included in one or more predefined address ranges.

7. Calculation system comprising the device according to any one of claims 4 to 6 for comparing the execution by a pre-emptive operating system of at least two programme tasks which are duplicated on the same calculation unit or on different calculation units, **characterised in that** the task interruption routines of the operating system are configured in the context of the pre-empted task to save the signature value (224) stored by the device.

8. Calculation system comprising the device according to claim 6 for comparing the execution by a pre-emptive operating system of at least two programme tasks which are duplicated on the same calculation unit or on different calculation units, wherein the predefined address ranges are selected in accordance with the memory zones in which the interruption routines of the operating system are recorded so that the address inclusion test carried out by the activation module (210) brings about the transmission of an inhibition signal when an interruption routine is executed.

9. Calculation system according to claim 8, wherein the task interruption routines of the operating system are configured to save the predefined address ranges in the context of the pre-empted task.

10. Method for comparing instruction execution streams on a calculation system, the method comprising a first execution of a sequence of instructions on a set of data and at least a second execution of the sequence of instructions on the same set of data, each of the executions producing transmissions of a stream of values on one or more buses connecting a memory to a calculation unit of the calculation system, **characterised in that** hardware means included in the system translate a logical address into a physical address and hardware means calculate a first signature which depends on the sequence of values transmitted during the first execution corresponding to instructions to be executed on the calculation unit and a second signature which depends on the sequence of values transmitted during the second execution and corresponding to data and addresses produced and/or read by the task, the method comprising, at one or more predefined and identical points of each of the executions, a comparison step (304) between said signatures in order to detect an anomaly in the execution of the task at different stages of the execution thereof, the executions being asynchronous, and **in that** an inhibition signal is transmitted to the signature calculation means when the execution of the task is interrupted in order not to authorise modification of the stored signature after receiving the inhibition signal.

11. Method for comparing instruction execution streams according to claim 10, wherein the signature calculation is cumulative, the hardware signature calculation means determining the value of a signature as a function of a preceding value of the signature and the current observed value passing on the bus.

12. Method for comparing instruction execution streams according to claim 10 or claim 11, wherein each calculated signature is saved in a register (224), the method comparing an initialisation step (302) of the register (224) with an identical value before each execution of the instruction sequence.

13. Method for comparing instruction execution streams according to any one of claims 10 to 12, the calculation system being pre-emptive, wherein, during the execution of a task on a calculation processor, the modification of the value of the signature is prohibited as soon as the processor changes into privileged mode.

14. Method for comparing instruction execution streams according to any one of claims 10 to 13, wherein, if the signatures compared are not identical, the sequence of instructions is executed again on the same set of data, a new signature is calculated on the new execution and the new signature is compared with the preceding signatures.
